# EUROPÄISCHE PATENTANMELDUNG

(11) **EP 4 722 514 A1**
(43) Veröffentlichungstag der Anmeldung: **08.04.2026**
(21) Anmeldenummer: 25202071.4
(22) Anmeldetag: 15.09.2025
(51) Int. Cl.: F02C 6/14, F02C 6/16, H02J 15/20

(54) **ADIABATISCHES DRUCKLUFT-ENERGIESPEICHERSYSTEM (A-CAES-SYSTEM) UND VERFAHREN**

(30) Priorität: 30.09.2024 DE 102024209480
(71) Anmelder: Siemens Energy Global GmbH & Co. KG, 81739 München (DE)
(72) Erfinder: Budi, Robert, 02826 Görlitz (DE); Döhring, Jörg, 02827 Görlitz (DE); Huber, Stefan, 02748 Görlitz (DE); Assmann, Ingo, 91058 Erlangen (DE); Hennig, Josefine, 02827 Görlitz (DE); Gottwald, Robert, 02827 Görlitz (DE); Schaible, Rene, 45359 Essen (DE); Dorn, Steffen, 41564 Kaarst (DE); Nicke, Frank, 02625 Bautzen (DE)

(57) **Zusammenfassung**

Die vorliegende Erfindung betrifft ein A-CAES-System aufweisend: eine Kompressoreinheit, die ausgebildet ist eine zugeführte Luft zu komprimieren; eine Druckluftspeichereinrichtung, die ausgebildet ist die von der Kompressoreinheit zugeführte komprimierte Luft zu speichern; eine Expandereinheit, die ausgebildet ist aus der Druckluftspeichereinrichtung zugeführte Luft zu expandieren; ein Luft-Rohrleitungssystem, welches die Kompressoreinheit mit der Druckluftspeichereinrichtung und die Druckluftspeichereinrichtung mit der Expandereinheit verbindet zum Leiten von Luft in die Kompressoreinheit und aus der Kompressoreinheit in die Druckluftspeichereinrichtung und aus der Druckluftspeichereinrichtung in die Expandereinheit und aus der Expandereinheit nach dem Expandieren der Luft; eine erste Luft/Flüssigsalz-Wärmetauschereinrichtung, welche derart ausgebildet ist Wärmeenergie aus der durch die Kompressoreinheit komprimierten Luft aufzunehmen und die Luft auf eine erste Temperatur zu kühlen, und eine der ersten Luft/Flüssigsalz-Wärmetauschereinrichtung in dem Luft-Rohrleitungssystem nachgeschaltete erste Luft/Wasser-Wärmetauschereinrichtung, welche derart ausgebildet ist Wärmeenergie aus der durch die Kompressoreinheit komprimierten Luft aufzunehmen und die Luft auf eine zweite Temperatur weiter abzukühlen, welche niedriger als die erste Temperatur ist zum Zuführen der Luft der Druckluftspeichereinrichtung.

## Beschreibung

Die vorliegende Erfindung betrifft ein adiabatisches Druckluft-Energiespeichersystem (A-CAES-System) und ein Verfahren.

Es ist allgemein bekannt, dass bei der Gewinnung von erneuerbaren Energien, z.B. durch Windkraftanlagen oder Photovoltaikanlagen usw., erheblichen Schwankungen auftreten können. Um erzeugten Strom zu speichern existieren verschiedene Möglichkeiten. Dazu gehören beispielsweise Pumpspeicherkraftwerke. Diese haben jedoch den Nachteil, dass sie einen Höhenunterschied erfordern, was in flachen Regionen nicht gegeben ist. Des Weiteren sind sog. Druckluftspeichersysteme, welche auch als CAES (Compressed Air Energy Storage) - Systeme bezeichnet werden, bekannt. darunter sog. adiabatische Druckluftspeichersysteme bzw. A-CAES (Adiabatic - Compressed Air Energy Storage) - Systeme.

Druckluftspeicherkraftwerke bzw. -systeme, d.h. CAES Kraftwerke bzw. -systeme, basieren auf dem Prinzip der Verdichtung von Luft zur Leistungsaufnahme, der Speicherung der komprimierten Luft und der Expansion zur Leistungsabgabe.

Aus der DE 10 2011 112 280 A1 ist eine Anlage zur Speicherung von Energie mittels Druckluft bekannt. Dabei nimmt ein Speichervolumen Luft unter erhöhtem Druck auf. Umgebungsluft wird zur Energie-Speicherung komprimiert und in das Speichervolumen gebracht. Zur Ausspeicherung wird Druckluft aus dem Speichervolumen entnommen und unter Arbeitsabgabe in die Umgebung entlassen.

Durch das Komprimieren der Luft wird diese erhitzt. Diese Kompressionswärme zu wird von adiabatischen Druckluftspeichersystemen bzw. A-CAES (Adiabatic - Compressed Air Energy Storage) - Systemen genutzt und gespeichert. Dazu sind bisher kostspielige Speichertankeinrichtungen erforderlich.

Vor diesem Hintergrund liegt der vorliegenden Erfindung die Aufgabe zugrunde, ein verbessertes A-CAES-System bereitzustellen.

Erfindungsgemäß wird diese Aufgabe durch ein A-CAES-System mit den Merkmalen des Patentanspruchs 1 und/oder durch ein Verfahren mit den Merkmalen des Patentanspruches 13 gelöst.

Demgemäß ist vorgesehen:
Ein adiabatisches Druckluft-Energiespeichersystem (A-CAES-System) aufweisend:
- eine Kompressoreinheit, die ausgebildet ist zugeführte Luft zu komprimieren,
- eine Druckluftspeichereinrichtung, die ausgebildet ist, die von der Kompressoreinheit zugeführte komprimierte Luft zu speichern,
- eine Expandereinheit, die ausgebildet ist, aus der Druckluftspeichereinrichtung zugeführte Luft zu expandieren,
- ein Luft-Rohrleitungssystem, welches in Strömungsrichtung die Kompressoreinheit mit der Druckluftspeichereinrichtung und die Druckluftspeichereinrichtung mit der Expandereinheit verbindet zum Leiten von Luft in die Kompressoreinheit und aus der Kompressoreinheit in die Druckluftspeichereinrichtung und aus der Druckluftspeichereinrichtung in die Expandereinheit und aus der Expandereinheit nach dem Expandieren der Luft,
- wenigstens eine Luft/Flüssigsalz-Wärmetauschereinrichtung, welche derart ausgebildet ist Wärmeenergie aus der durch die Kompressoreinheit komprimierten Luft aufzunehmen und die Luft auf eine erste Temperatur zu kühlen, und
- wenigstens eine der Luft/Flüssigsalz-Wärmetauschereinrichtung in Strömungsrichtung in dem Luft-Rohrleitungssystem nachgeschaltete Luft/Wasser-Wärmetauschereinrichtung, welche derart ausgebildet ist Wärmeenergie aus der durch die Kompressoreinheit komprimierten Luft aufzunehmen und die Luft auf eine zweite Temperatur weiter abzukühlen, welche niedriger als die erste Temperatur ist zum Zuführen der Luft der Druckluftspeichereinrichtung.

Die der vorliegenden Erfindung zugrundeliegende Idee besteht darin, Flüssigsalz und Wasser als zwei thermische Energiespeicher zu kombinieren, um zumindest die Anzahl an Zwischenkühlungen bei dem A-CAES-System zu reduzieren und dadurch die Komplexität und Kosten des A-CAES-System zu senken. Flüssigsalz kann eine größere Menge an Wärmeenergie aufnehmen und drucklos speichern als Wasser, welches eine Siedetemperatur bei ca. 100°C aufweist. Da Flüssigsalz, je nach Art bzw. Sorte des Flüssigsalzes, jedoch eine Schmelztemperatur oberhalb der Siedetemperatur des Wassers aufweist, wird Wasser als zweiter thermischer Energiespeicher eingesetzt, um die Luft unter die Schmelztemperatur des Flüssigsalzes weiter kühlen zu können, beispielsweise auf eine Einlasstemperatur der Druckluftspeichereinrichtung, vorzugsweise die maximale Einlasstemperatur der Druckluftspeichereinrichtung. Unterhalb der Schmelztemperatur beginnt das Flüssigsalz dagegen zu kristallisieren.

Weiter ist vorgesehen ein Verfahren zur adiabatischen Druckluftenergiespeicherung, wobei das Verfahren die Schritte aufweist:
- Komprimieren von Luft, insbesondere Umgebungsluft in einer Kompressoreinheit,
- Kühlen der Luft in einer ersten Luft/Flüssigsalz-Wärmetauschereinrichtung auf eine erste Temperatur (T_{WÄ-S2}), und Zuführen und Speichern der Luft in einer Druckluftspeichereinrichtung, wobei das Verfahren wahlweise zusätzlich den Schritt aufweist:
- nach dem Kühlen der Luft in der ersten Luft/Flüssigsalz-Wärmetauschereinrichtung Zuführen und Kühlen der Luft in einer ersten Luft/Wasser-Wärmetauschereinrichtung auf eine zweite Temperatur (T_{WÄ-W2}), welche niedriger als die erste Temperatur (T_{WÄ-S2}) ist und Zuführen und Speichern der Luft anschließend in der Druckluftspeichereinrichtung.

Vorteilhafte Ausgestaltungen und Weiterbildungen ergeben sich aus den weiteren Unteransprüchen sowie aus der Beschreibung unter Bezugnahme auf die Figuren der Zeichnung.

In einer Ausführungsform der Erfindung liegt die zweite Temperatur unterhalb der Schmelztemperatur des Flüssigsalzes und entspricht vorzugsweise der Einlasstemperatur der Druckluftspeichereinrichtung. Die Druckluftspeichereinrichtung weist wenigstens einen unterirdischen Druckluftspeichertank, wenigstens einen überirdischen Druckluftspeichertank und/oder wenigstens eine Kaverne, insbesondere einen Salzstock auf.

In einer weiteren Ausführungsform der Erfindung weist die Kompressoreinheit wenigstens einen oder zwei Kompressoren auf mit jeweils einem Lufteinlass und einem Luftauslass, wobei die Kompressoren vorzugsweise in Strömungsrichtung in einer Reihe hintereinander geschaltet durch das Luft-Rohrleitungssystem miteinander verbunden sind, wobei Luft durch einen Lufteinlass des ersten Kompressors, vorzugsweise einem Niederdruckkompressor, der Kompressoreinheit zugeführt wird und die Luft aus einem Luftauslass des letzten Kompressors, vorzugsweise einem Hochdruckkompressor, aus der Kompressoreinheit dem Lufteinlass der Druckluftspeichereinrichtung zugeführt wird. Zwischen dem letzten Kompressor und der Druckluftspeichereinrichtung sind in Strömungsrichtung die wenigstens eine erste Luft/Flüssigsalz-Wärmetauschereinrichtung und die wenigstens eine erste Luft/Wasser-Wärmetauschereinrichtung vorgesehen.

In einer anderen Ausführungsform der Erfindung ist in Strömungsrichtung zwischen wenigstens zwei der Kompressoren der Kompressoreinheit wenigstens eine weitere Wärmetauschereinrichtung zum Kühlen der Luft vorgesehen, die durch das Luft-Rohrleitungssystem in einer Reihe mit den beiden Kompressoren verbunden ist, wobei die Wärmetauschereinrichtung eine zweite Luft/Flüssigsalz-Wärmetauschereinrichtung oder eine zweite Luft/Wasser-Wärmetauschereinrichtung ist. Vorzugsweise ist zwischen den beiden Kompressoren in Strömungsrichtung insbesondere zuerst die weitere, zweite Luft/Flüssigsalz-Wärmetauschereinrichtung und anschließend die weitere, zweite Luft/Wasser-Wärmetauschereinrichtung vorgesehen und über das Luft-Rohrleitungssystem mit den beiden Kompressoren in einer Reihe hintereinandergeschaltet verbunden.

Gemäß einer Ausführungsform der Erfindung weist das adiabatische Druckluft-Energiespeichersystem wenigstens eine weitere, dritte Luft/Flüssigsalz-Wärmetauschereinrichtung auf, welche derart ausgebildet ist Wärmeenergie an die in der Expandereinheit zu expandierende Luft abzugeben und diese zu erwärmen. Zusätzlich oder alternativ weist das adiabatische Druckluft-Energiespeichersystem wenigstens eine weitere, dritte Luft/Wasser-Wärmetauschereinrichtung auf, welche derart ausgebildet ist Wärmeenergie an die in der Expandereinheit zu expandierende Luft abzugeben und diese zu erwärmen. Das Luft-Rohrleitungssystem verbindet in Strömungsrichtung die Druckluftspeichereinrichtung mit der Expandereinheit, wobei die wenigstens eine weitere, dritte Luft/Flüssigsalz-Wärmetauschereinrichtung und/oder die wenigstens eine weitere, dritte Luft/Wasser-Wärmetauschereinrichtung in Strömungsrichtung zwischen der Druckluftspeichereinrichtung und der Expandereinheit in dem Luft-Rohrleitungssystem angeordnet ist bzw. sind zum Erwärmen der Luft aus der Druckluftspeichereinrichtung und zum Zuführen der erwärmten Luft der Expandereinheit.

In einer Ausführungsform der Erfindung weist die Expandereinheit wenigstens einen oder zwei Expander auf mit jeweils einem Lufteinlass und einem Luftauslass, wobei die Expander vorzugsweise in Strömungsrichtung in einer Reihe hintereinander geschaltet durch das Luft-Rohrleitungssystem miteinander verbunden sind, wobei Luft durch einen Lufteinlass des ersten Expanders, vorzugsweise eines Hochdruckexpanders, der Expandereinheit zugeführt wird und die Luft aus einem Luftauslass des letzten Expanders, vorzugsweise eines Niederdruckexpanders, aus der Expandereinheit wieder herausgeführt wird zum Abgeben der Luft insbesondere an die Umgebungsluft.

In einer weiteren Ausführungsform der Erfindung ist bzw. sind zwischen der Druckluftspeichereinrichtung und dem ersten Expander in Strömungsrichtung die weitere bzw. dritte Luft/Wasser-Wärmetauschereinrichtung und/oder die weitere bzw. dritte Luft/Flüssigsalz-Wärmetauschereinrichtung in dem Luft-Rohrleitungssystem vorgesehen zum Erwärmen der Luft zum Expandieren der erwärmten Luft durch den ersten Expander. Vorzugsweise ist in Strömungsrichtung zwischen wenigstens zwei der Expander der Expandereinheit wenigstens eine weitere, vierte Wärmetauschereinrichtung zum Erwärmen der Luft vorgesehen, die durch das Luft-Rohrleitungssystem in einer Reihe mit den beiden Expandern verbunden ist. Die wenigstens vierte Wärmetauschereinrichtung ist dabei vorzugsweise eine weitere vierte Luft/Flüssigsalz-Wärmetauschereinrichtung oder eine weitere vierte Luft-Wasser-Wärmetauschereinrichtung.

Gemäß einer Ausführungsform der Erfindung weist das adiabatische Druckluft-Energiespeichersystem ein Flüssigsalz-Speichersystem auf, welches eine Kalt-Flüssigsalz-Speichertankeinrichtung zum Speichern von Flüssigsalz zumindest bei seiner Schmelztemperatur oder vorzugsweise einer vorbestimmten Puffertemperatur oberhalb seiner Schmelztemperatur, und eine Warm-Flüssigsalz-Speichertankeinrichtung aufweist zum Speichern des durch die jeweilige mit ihr verbundene Luft/Flüssigsalz-Wärmetauschereinrichtung erwärmten Flüssigsalzes auf eine Temperatur oberhalb der Temperatur des Flüssigsalzes der Kalt-Flüssigsalz-Speichertankeinrichtung. Die Kalt-Flüssigsalz-Speichertankeinrichtung und/oder die Warm-Flüssigsalz-Speichertankeinrichtung ist bzw. sind vorzugsweise eine drucklose oder im Wesentlichen drucklose Speichertankeinrichtung.

In einer Ausführungsform der Erfindung weist das adiabatische Druckluft-Energiespeichersystem ein Flüssigsalz-Rohrleitungssystem auf, welches einen Flüssigsalz-Auslass der Kalt-Flüssigsalz-Speichertankeinrichtung in Strömungsrichtung mit einem Flüssigsalz-Einlass der wenigstens ersten und/oder zweiten Luft/Flüssigsalz-Wärmetauschereinrichtung verbindet zum Zuführen und Erwärmen des Flüssigsalzes. Das Flüssigsalz-Rohrleitungssystem verbindet einen Flüssigsalz-Auslass der wenigstens ersten und/oder zweiten Luft/Flüssigsalz-Wärmetauschereinrichtung mit einem Flüssigsalz-Einlass der Warm-Flüssigsalz-Speichertankeinrichtung zum Zuführen und Speichern des erwärmten Flüssigsalzes in der Warm-Flüssigsalz-Speichertankeinrichtung. Vorzugsweise verbindet das Flüssigsalz-Rohrleitungssystem einen Flüssigsalz-Auslass der Warm-Flüssigsalz-Speichertankeinrichtung mit einem Flüssigsalz-Einlass der wenigstens dritten oder vierten Luft/Flüssigsalz-Wärmetauschereinrichtung zum Zuführen und Kühlen des Flüssigsalzes. Das Flüssigsalz-Rohrleitungssystem verbindet vorzugsweise einen Flüssigsalz-Auslass der wenigstens dritten oder vierten Luft/Flüssigsalz-Wärmetauschereinrichtung mit einem Flüssigsalz-Einlass der Kalt-Flüssigsalz-Speichertankeinrichtung zum Zuführen und Speichern des gekühlten Flüssigsalzes in der Kalt-Flüssigsalz-Speichertankeinrichtung.

In einer weiteren Ausführungsform der Erfindung weist das adiabatische Druckluft-Energiespeichersystem ein Wasser-Speichersystem auf, welches eine Kalt-Wasser-Speichertankeinrichtung zum Speichern von Wasser und eine Warm-Wasser-Speichertankeinrichtung aufweist zum Speichern des durch die jeweilige mit ihr verbundene Luft/Wasser-Wärmetauschereinrichtung erwärmten Wassers auf eine Temperatur oberhalb der Temperatur des Wassers in der Kalt-Wasser-Speichertankeinrichtung.

In einer anderen Ausführungsform der Erfindung weist das adiabatische Druckluft-Energiespeichersystem ein Wasser-Rohrleitungssystem auf, welches einen Wasser-Auslass der Kalt-Wasser-Speichertankeinrichtung in Strömungsrichtung mit einem Wasser-Einlass der wenigstens ersten und/oder zweiten Luft/Wasser-Wärmetauschereinrichtung verbindet zum Zuführen und Erwärmen des Wassers. Das Wasser-Rohrleitungssystem verbindet einen Wasser-Auslass der wenigstens ersten und/oder zweiten Luft/Wasser-Wärmetauschereinrichtung mit einem Wasser-Einlass der Warm-Wasser-Speichertankeinrichtung zum Zuführen und Speichern des erwärmten Wassers in der Warm-Wasser-Speichertankeinrichtung. Das Wasser-Rohrleitungssystem verbindet vorzugsweise einen Wasser-Auslass der Warm-Wasser-Speichertankeinrichtung mit einem Wasser-Einlass der wenigstens dritten Luft/Wasser-Wärmetauschereinrichtung zum Zuführen und Kühlen des erwärmten Wassers. Vorzugsweise verbindet das Wasser-Rohrleitungssystem einen Wasser-Auslass der wenigstens dritten Luft/Wasser-Wärmetauschereinrichtung mit einem Wasser-Einlass der Kalt-Wasser-Speichertankeinrichtung zum Zuführen und Speichern des gekühlten Wassers in der Kalt-Wasser-Speichertankeinrichtung.

Gemäß einer Ausführungsform der Erfindung weist das adiabatische Druckluft-Energiespeichersystem einen Wasser-Trimmkühler und/oder einen Flüssigsalz-Trimmkühler und/oder einen Luft-Trimmkühler auf. Der Wasser-Trimmkühler ist in Strömungsrichtung zwischen der dritten oder letzten Luft/Wasser-Wärmetauschereinrichtung und der Kalt-Wasser-Speichertankeinrichtung in dem Wasser-Rohrleitungssystem vorgesehen ist zum Ausgleichen einer Temperaturdifferenz zwischen dem durch die dritte oder letzte Luft/Wasser-Wärmetauschereinrichtung gekühlten Wassers und dem in der Kalt-Wasser-Speichertankeinrichtung gespeicherten Wassers. Der Flüssigsalz-Trimmkühler ist in Strömungsrichtung zwischen der vierten oder letzten Luft/Flüssigsalz-Wärmetauschereinrichtung und der Kalt-Flüssigsalz-Speichertankeinrichtung in dem Flüssigsalz-Rohrleitungssystem vorgesehen ist zum Ausgleichen einer Temperaturdifferenz zwischen dem durch die vierte oder letzte Luft/Flüssigsalz-Wärmetauschereinrichtung gekühlten Flüssigsalz und dem in der Kalt-Flüssigsalz-Speichertankeinrichtung gespeicherten Flüssigsalz. Der Luft-Trimmkühler ist in Strömungsrichtung zwischen der letzten Luft/Wasser-Wärmetauschereinrichtung vor der Druckluftspeichereinrichtung in dem Luft-Rohrleitungssystem vorgesehen zum Ausgleichen einer Temperaturdifferenz zwischen der in dieser letzten Luft/Wasser-Wärmetauschereinrichtung gekühlten Luft und der in der Druckluftspeichertankeinrichtung gespeicherten Luft.

In einer Ausführungsform der Erfindung weist das Verfahren die Schritte auf:
- Zuführen von Luft aus der Druckluftspeichereinrichtung einer weiteren Luft/Flüssigsalz-Wärmetauschereinrichtung und/oder Luft/Wasser-Wärmetauschereinrichtung, welche derart ausgebildet ist Wärmeenergie an die Luft abzugeben und diese zu erwärmen, und
- Zuführen der erwärmten Luft einer Expandereinheit zum Expandieren der Luft.

In einer weiteren Ausführungsform der Erfindung weist das Verfahren die Schritte auf:
- Speichern des durch die erste Luft/Flüssigsalz-Wärmetauschereinrichtung erwärmten Flüssigsalzes in einem Flüssigsalz-Speichersystem, wobei das Flüssigsalz-Speichersystem vorzugsweise mit der weiteren Luft/Flüssigsalz-Wärmetauschereinrichtung derart gekoppelt ist zum Zuführen gespeicherten Flüssigsalzes aus dem Flüssigsalz-Speichersystem der weiteren Luft/Flüssigsalz-Wärmetauschereinrichtung zum Erwärmen der in der Expandereinheit zu expandierenden Luft durch die weitere Luft/Flüssigsalz-Wärmetauschereinrichtung, und/oder
- Speichern des durch die ersten Luft/Wasser-Wärmetauschereinrichtung erwärmte Wasser in einem Wasser-Speichersystem, wobei das Wasser-Speichersystem vorzugsweise mit der weiteren Luft/Wasser-Wärmetauschereinrichtung derart gekoppelt ist zum Zuführen gespeicherten Wasser aus dem Wasser-Speichersystem der weiteren Luft/Wasser-Wärmetauschereinrichtung zum Erwärmen der in der Expandereinheit zu expandierenden Luft durch die weitere Luft/Wasser-Wärmetauschereinrichtung.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand des in der schematischen Figur der Zeichnung angegebenen Ausführungsbeispiels näher erläutert. Es zeigt dabei:

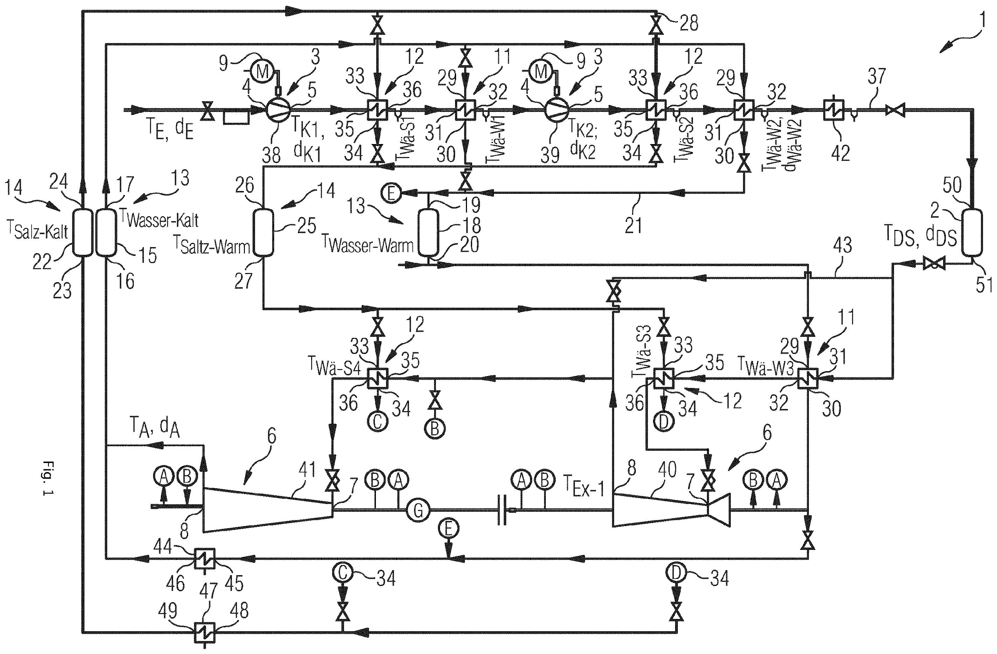

Fig. 1 ein schematisches Blockdiagramm eines adiabatischen Druckluft-Energiespeichersystem, kurz A-CAES-System, gemäß einer erfindungsgemäßen Ausführungsform.

Die beiliegende Zeichnung soll ein weiteres Verständnis der Ausführungsformen der Erfindung vermitteln. Sie veranschaulicht eine Ausführungsform und dient im Zusammenhang mit der Beschreibung der Erklärung von Prinzipien und Konzepten der Erfindung. Andere Ausführungsformen und viele der genannten Vorteile ergeben sich im Hinblick auf die Zeichnung. Die Elemente der Zeichnung sind nicht notwendigerweise maßstabsgetreu zueinander gezeigt.

In der Figur der Zeichnung sind gleiche, funktionsgleiche und gleich wirkende Elemente, Merkmale und Komponenten - sofern nichts Anderes ausführt ist -jeweils mit denselben Bezugszeichen versehen.

In Fig. 1 ist ein Ausführungsbeispiel eines erfindungsgemäßen Druckluft-Energiespeichersystems 1, d.h. eines sog. CAES (Compressed Air Energy Storage) Systems, hier eines adiabatischen Druckluft-Energiespeichersystems, d.h. kurz A-CAES Systems, gezeigt, um Luft in einer Druckluftspeichereinrichtung 2 zu speichern. Im nachfolgenden wird durchgehend das adiabatische Druckluft-Energiespeichersystems als A-CAES System 1 abgekürzt.

Dabei wird Luft mit einer Eingangstemperatur T_{E} und einem Eingangsdruck d_{E}, z.B. Umgebungsluft mit einer Umgebungslufttemperatur und einem Umgebungsluftdruck, in einer oder mehreren Kompressionsstufen in einem Ladevorgang zur Leistungsaufnahme auf eine vorbestimmte Temperatur mit einem vorbestimmten Druck komprimiert und in der Druckluftspeichereinrichtung gespeichert. Die vorbestimmte Temperatur ist dabei vorzugsweise die vorbestimmte Einlasstemperatur T_{DS} der Druckluftspeichereinrichtung 2, z.B. T_{DS} = 40°C, mit dem entsprechenden Einlassdruck d_{DS} in der Druckluftspeichereinrichtung, d.h. der Speicherdruck der Luft.

Zum Komprimieren der Luft von der Eingangstemperatur T_{E}, z.B. Umgebungslufttemperatur, und dem Eingangsdruck d_{E}, z.B. Umgebungsluftdruck, auf die vorbestimmte Temperatur T_{DS} der Druckluftspeichereinrichtung 2 und den vorbestimmten Speicherdruck der Luft d_{DS} in der Druckspeichereinrichtung 2 sind ein oder mehrere Zwischenkühlungen der Luft notwendig. Die in der Druckluftspeichereinrichtung 2 gespeicherte, komprimierte Luft kann anschließend zur Leistungsentnahme in einem Entladevorgang wieder expandiert werden auf eine vorbestimmte Auslasstemperatur T_{A} und Auslassdruck d_{A}, beispielsweise wieder die Umgebungslufttemperatur und den Umgebungsluftdruck. Durch das Expandieren, wird die zuvor durch Kompression der Luft gespeicherte elektrische Energie, wieder freigesetzt und damit ein jeweilige Expander einer Expandereinheit 3, z.B. eine Turbine, angetrieben. Die Expandereinheit 3 weist dabei einen Lufteinlass 4 und einen Luftauslass 5 auf.

Zum Expandieren der Luft werden ein oder mehrere Überhitzungen bzw. Erwärmungen der Luft durchgeführt. Für die eingesetzten Wärmetauscher wird dabei zum Zwischenkühlen und Erwärmen bzw. Überhitzen der Luft als thermischer Energiespeicher neben Wasser ein Flüssigsalz, d.h. eine Salzschmelze, verwendet.

Die in Fig. 1 gezeigte A-CAES-System 1 weist als DruckluftSpeichereinrichtung 2 einen oder mehrere Druckluft-Speichertanks auf. Ein solcher Druckluft-Speichertank kann beispielsweise ein unterirdischer Speichertank, ein an der Oberfläche angeordneter oder überirdischer Speichertank oder eine Kaverne sein, beispielsweise ein Salzstock usw.. Je nach Art bzw. Beschaffenheit und Größe des Druckluft-Speichertanks kann darin Luft in einem vorbestimmten Druckbereich, d.h. Einlassdruckbereich und einem vorbestimmten Temperaturbereich, d.h. Einlasstemperaturbereich, gespeichert werden.

Bei einem Druckluft-Speichertank wie z.B. einer Kaverne, insbesondere einem Salzstock, kann die Luft beispielsweise bei einer Temperatur T_{DS} im Bereich von z.B. 40°C bis 60°C und einem Druck d_{DS} von z.B. 70bar bis 200bar, gespeichert werden. Die Werte für den Druck und die Temperatur in dem Druckluft-Speichertank sind dabei lediglich beispielhaft und können größer oder kleiner als die angegebenen Werte sein, je nach Druckluftspeichertank, hier z.B. dem Salzstock als Kaverne usw.. Als Einlasstemperatur T_{DS} und Einlassdruck d_{DS} wird daher vorzugsweise ein Wert aus diesem Bereichen genommen. Beispielsweise wird die Einlasstemperatur T_{DS} für die in der Druckluftspeichereinrichtung 2 zu speichernde Luft vorzugsweise so gewählt, dass sie der Temperatur in der Speichertankeinrichtung, z.B. Salzstock als Kaverne, entspricht oder möglichst nahe an der Temperatur der Speichertankeinrichtung liegt und eine Speicherung bei einem für die Speichertankeinrichtung geeigneten Einlassdruck d_{DS} erfolgt.

Das A-CAES-System 1 weist des Weiteren eine Kompressoreinheit 6, mit einem Lufteinlass 7 und einem Luftauslass 8 auf, welche in einem Ladevorgang zur Leistungsaufnahme Luft, hier z.B. Umgebungsluft, komprimiert und die komprimierte Luft in der Druckluftspeichereinrichtung 2 speichert. Die Kompressoreinheit 6 ist dabei mit einer Motoreinheit aus wenigstens einem oder mehreren Motoren 9 gekoppelt zum Komprimieren der Luft.

Weiter weist das A-CAES-System 1 die zuvor genannte Expandereinheit 3 auf, welche in einem Entladevorgang zur Leistungsabgabe die zuvor gespeicherte Luft wieder expandiert. Die Expandereinheit 3 fungiert somit vorzugsweise als Verbrauchereinheit, welche die als Druckluft in der Druckluftspeichereinrichtung 2 gespeicherte elektrische Energie verbraucht. Durch das Expandieren der Luft wird ein Expander, z.B. eine Turbine, der Expandereinheit 3 betrieben. Die Aufzählung der Beispiele für Expander als Abnehmer bzw. Verbraucher ist dabei rein beispielhaft und nicht abschließend. Auf diese Weise kann Energie, insbesondere erneuerbare Energie, gespeichert und bei Bedarf abgerufen und verbraucht werden. So kann insbesondere ein Überschuss an erzeugter erneuerbarer Energie in Form von Druckluft in der Druckspeichereinrichtung 2 zwischengespeichert und bei Bedarf verbraucht werden. Die Expandereinheit 3 ist mit einer Generatoreinheit aus wenigstens einem oder mehreren Generatoren 10 gekoppelt zum Expandieren der Luft.

Dabei weist das A-CAES-System 1 wenigstens eine oder mehrere Luft-Wasser-Wärmetauschereinrichtungen 11 und wenigstens eine oder mehrere Luft/Flüssigsalz-Wärmetauschereinrichtung 12 sowie ein Wasser-Speichersystem 13 und ein Flüssigsalz-Speichersystem 14 als 2-Temperatur-Speichersystem auf zum Aufnehmen und Speichern von Wärmeenergie, d.h. Kompressionswärme, die bei der Komprimierung der Luft durch die Kompressoreinheit 6 entsteht und zum Abgeben von Wärmeenergie, d.h. der Kompressionswärme, an die Luft, wenn diese in der Expandereinheit 3 zur Leistungsentnahme wieder expandiert wird. Die Kompressoreinheit 6, die Druckluftspeichereinrichtung 2, die Expandereinheit 3, sowie die wenigstens eine Luft-Wasser-Wärmetauschereinrichtungen 11 und die wenigstens eine Luft/Flüssigsalz-Wärmetauschereinrichtung 12 sind über ein Luft-Rohrleitungssystem 37 miteinander verbunden.

Das Flüssigsalz als thermischer Speicher kann auch als Salzschmelze bezeichnet werden. In der Beschreibung wird durchgehend der Begriff Flüssigsalz verwendet. Der Begriff Flüssigsalz kann aber auch durch Salzschmelze ersetzt werden.

In dem in Fig. 1 gezeigten Ausführungsbeispiel, weist das Wasser-Speichersystem 13 eine Kalt-Wasser-Speichertankeinrichtung 15 mit einem Wasser-Einlass 16 und einem Wasser-Auslass 17 und eine Warm-Wasser-Speichertankeinrichtung 18 mit einem Wasser-Einlass 19 und einem Wasser-Auslass 20 auf, die über ein Wasser-Rohrleitungssystem 21 in Strömungsrichtung miteinander verbunden sind. Die Strömungsrichtung in dem jeweiligen Rohrleitungssystem ist in Fig. 1 mit Pfeilen gekennzeichnet. Statt Warm-Wasser-Speichertankeinrichtung kann ebenso der Begriff Heiß-Wasser-Speichertankeinrichtung in der Beschreibung verwendet werden.

Des Weiteren weist in dem in Fig. 1 gezeigten Ausführungsbeispiel das Flüssigsalz-Speichersystem 14 eine Kalt-Flüssigsalz-Speichertankeinrichtung 22 mit einem Flüssigsalz-Eingang 23 und einem Flüssigsalz-Ausgang 24 und eine Warm- bzw. Heiß-Flüssigsalz-Speichertankeinrichtung 25 mit einem Flüssigsalz-Eingang 26 und einem Flüssigsalz-Ausgang 27 auf, die über ein Flüssigsalz-Rohrleitungssystem 28 miteinander verbunden sind. Die Temperatur des Flüssigsalzes, d.h. der Salzschmelze, in der Kalt-Flüssigsalz-Speichertankeinrichtung 22 entspricht dabei zumindest der Schmelztemperatur oder liegt vorzugsweise oberhalb der Schmelztemperatur des Flüssigsalzes, d.h. der Salzschmelze, bei einer vorbestimmten Puffertemperatur, so dass dieses nicht kristallisiert. Unterhalb dieser Schmelztemperatur beginnt das Flüssigsalz, d.h. die Salzschmelze, zu kristallisieren. Die Puffertemperatur ist so gewählt, dass sie ausreichend oberhalb der Schmelztemperatur des Flüssigsalzes liegt, um nicht ungewollt zu kristallisieren und andererseits im Betrieb möglichst viel Wärmeenergie bzw. Kompressionswärme aufnehmen und speichern kann. Statt Warm-Flüssigsalz-Speichertankeinrichtung 25 kann ebenso der Begriff Heiß-Flüssigsalz-Speichertankeinrichtung in der Beschreibung verwendet werden.

Außerdem weist in dem Beispiel in Fig. 1 das erfindungsgemäße 2-Temperatur Speichersystem hierbei wenigstens eine Luft/Wasser-Wärmetauschereinrichtung 11 zur Aufnahme von Wärmeenergie bzw. Kompressionswärme von durch die Kompressoreinheit 6 komprimierter Luft und/oder wenigstens eine Luft/Wasser-Wärmetauschereinrichtung 11 zur Abgabe der Wärmeenergie bzw. Kompressionswärme an die durch die Expandereinheit 3 zu expandierende Luft auf.

Die jeweiligen Luft/Wasser-Wärmetauschereinrichtungen 11, wie sie in Fig. 1 gezeigt sind, weisen jeweils einen Wasser-Einlass 29 und einen Wasser-Auslass 30 sowie einen Lufteinlass 31 und einen Luftauslass 32 auf.

Die Luft/Wasser-Wärmetauschereinrichtungen 11 sind mit ihren Wasser-Ein- und Auslässen 29, 30 mit dem Wasser-Rohrleitungssystem 21 und mit ihren Luftein- und auslässen 32, 32 mit dem Luft-Rohrleitungssystem 37 verbunden. Durch die Aufnahme von Wärmenergie bzw. Kompressionswärme mittels der Luft/Wasser-Wärmetauschereinrichtung 11 wird das Wasser aus der Kalt-Wasser-Speichertankeinrichtung 15 erwärmt bzw. erhitzt und über das Wasser-Rohrleitungssystem 21 weiter an die Warm-Wasser-Speichertankeinrichtung 18 geleitet und dort gespeichert.

Bei Bedarf kann das in der Warm-Wasser-Speichertankeinrichtung 18 gespeicherte Wasser über die gleiche, andere Luft/Wasser-Wärmetauschereinrichtung 11 seine aufgenommene Wärmeenergie bzw. Kompressionswärme an die durch die Expandereinheit 3 expandierte Luft wieder abgeben.

Weiter weist das erfindungsgemäße 2-Temperatur Speichersystem wenigstens eine Luft/Flüssigsalz-Wärmetauschereinrichtung 12 zur Aufnahme von Kompressionswärme bzw. Wärmeenergie von durch die Kompressoreinheit 6 komprimierter Luft und/oder wenigstens eine weitere Luft/Flüssigsalz-Wärmetauschereinrichtung 12 zur Abgabe der Kompressionswärme bzw. Wärmeenergie an die durch die Expandereinheit 6 expandierte Luft auf.

Die jeweiligen Luft/Flüssigsalz-Wärmetauschereinrichtungen 12, wie sie in Fig. 1 gezeigt sind, weisen jeweils einen Flüssigsalz-Einlass 33 und einen Flüssigsalz-Auslass 34 sowie einen Lufteinlass 35 und einen Luftauslass 36 auf.

Die Luft/Flüssigsalz-Wärmetauschereinrichtungen 12 sind dabei mit ihren Flüssigsalz-Ein- und Auslässen 33, 34 dem Flüssigsalz-Rohrleitungssystem 28 und mit ihren Luftein- undauslässen 35, 36 mit dem Luft-Rohrleitungssystem 37 verbunden.

Durch die Aufnahme von Wärmeenergie bzw. Kompressionswärme mittels der Luft/Flüssigsalz-Wärmetauschereinrichtung 12 wird das Flüssigsalz aus der Kalt-Flüssigsalz-Speichertankeinrichtung 22 erwärmt und über das Flüssigsalz-Rohrleitungssystem 28 weiter an die Warm-Flüssigsalz-Speichertankeinrichtung 25 geleitet und dort gespeichert. Bei Bedarf kann das in der Warm-Flüssigsalz-Speichertankeinrichtung 25 gespeicherte Flüssigsalz seine aufgenommene Wärmeenergie bzw. Kompressionswärme über die anschließende in Strömungsrichtung nachgeschaltete Luft/Flüssigsalz-Wärmetauschereinrichtung 12 an die durch die Expandereinheit 3 zu expandierende Luft wieder abgeben.

In dem erfindungsgemäßen adiabatischen Druckluftspeichersystem 1, d.h. A-CAES System, wird die Kompressionswärme bzw. Wärmeenergie, welche bei dem Ladevorgang entsteht, der komprimierten Luft entzogen und einem thermischen Energiespeicher zugeführt, in Fig. 1 der jeweiligen Flüssigsalz-Speichertankeinrichtung 25 und der jeweiligen Wasser-Speichertankeinrichtung 18. Während des Expansionsbetriebes wird die gespeicherte thermische Energie dann der Expansionsluft über die entsprechenden Wärmetauschereinrichtung zugeführt, hier in Fig. 1 der jeweiligen Luft/Flüssigsalz-Wärmetauschereinrichtung 12 und der jeweiligen Luft/Wasser-Wärmetauschereinrichtung 11. Hierdurch wird der Wirkungsgrad der Anlage gesteigert und das Zuführen thermischer Energie aus externen Quellen durch ggf. fossile Energieträger, wie z.B. Gas, wird vermieden.

Die Kompression und/oder die Expansion kann ein- oder, wie in dem Ausführungsbeispiel in Fig. 1, z.B. mehrstufig erfolgen. Dem entsprechend weist die Kompressoreinheit 6 beispielweise wenigstens einen ersten und einen zweiten Kompressor 38, 39 mit jeweils dem Luftein- und auslass 7, 8 und die Expandereinheit 3 wenigstens einen ersten und einen zweiten Expander 40, 41 mit jeweils dem Luftein- und auslass 4, 5 auf. Die Druckniveaus sind dabei wesentlich von dem Betriebstemperaturbereich des thermischen Energiespeichers abhängig. Als Kompressoren können z.B. Niederdruckkompressoren 38 und Hochdruckkompressoren 39 usw. vorgesehen werden. Gleiches gilt für die Expander. So können z.B. Niederdruckexpander 40 und Hochdruckexpander 41 usw.. vorgesehen werden.

Wesentliche Restriktionen und Randbedingungen für die Festlegung der Speichertemperatur und des Speicherdrucks des thermischen Energiespeichers, hier Wasser bzw. Flüssigsalz, sind:
- maximale zulässige Temperatur T_{DSmax} der Druckluftspeichereinrichtung 2,
- technisch und wirtschaftlich möglicher Betriebstemperaturbereich und Betriebsdruckbereich der Übertragungsmedien und Speichermedien, hier Flüssigsalz bzw. Wasser in Fig. 1,
- hohe Speichertemperatur = hoher Gesamtwirkungsgrad bzw. hohe RTE (Round Trip Efficiency)

Liegt beispielsweise die maximale Betriebstemperatur des thermischen Energiespeichers bei 200°C, bedingt dies, dass die Kompression bis zu einem Druckniveau von ca. 7 bara erfolgen kann, insbesondere in Abhängigkeit von dem Wirkungsgrad des jeweiligen Kompressors der Kompressoreinheit 6.

Eine Kompression auf höhere Drücke erfolgt daher z.B. mehrstufig mit diversen Zwischenkühlungen der Kompressionsluft durch entsprechende Wärmetauschereinrichtungen, insbesondere mit Übertragung der Wärmeenergie an den thermischen Energiespeicher. Bei dem Einsatz von Wasser als Übertragungs- und Speichermedium bedingt dieses ein Speicherdruckniveau von beispielsweise ca. 15-20 bara (bara ist die Einheit bar absolut).

Der thermische Teil des A-CAES-Systems 1 kann in einen energiebezogenen und einen leistungsbezogenen Kostenanteil gegliedert werden.

Der energiebezogene Anteil besteht im Wesentlichen aus dem Wasser-Speichersystem 13 und den zugehörigen Hilfssystemen, z.B. Pumpen, Ventile usw., in Fig. 1.

Der leistungsbezogene Anteil besteht wiederum aus dem jeweiligen Kompressor der Komopressoreinheit 6, dem jeweiligen Expander der Expandereinheit 3 und den Hauptluftwärmetauschern 11, 12 bzw. in Fig. 1 der jeweiligen Luft/Flüssigsalz-Wärmetauschereinrichtung 12 und der jeweiligen Luft/Wasser-Wärmetauschereinrichtung 11 sowie dem verbindenden Luft-Rohrleitungssystem 37. Das Luft-Rohrleitungssystem 37 verbindet die Kompressoreinheit 6 mit der Druckluftspeichereinrichtung 2 und mit der Expandereinheit 6 in Strömungsrichtung. Die Druckluftspeichereinrichtung 2 weist einen Lufteinlass 50 und einen Luftauslass 51 auf.

Die Gesamtkosten werden dann maßgeblich vom thermischen Energiespeicher, hier in Fig. 1 dem Flüssigsalz und dem Wasser, beeinflusst.

Wasser-Speichertankeinrichtungen 15, 18 sind besonders wirtschaftlich für das A-CAES System 1. Dabei wird die beim Komprimieren entstehende Kompressionswärme bzw. Wärmeenergie über die Wärmetauscher, hier die jeweilige Luft/Wasser-Wärmetauschereinrichtung 11, an das Wasser abgegeben, das dann in dem Wasser-Speichersystem 13, hier der Warm-Wasser-Speichertankeinrichtung 18 in Fig. 1 gespeichert wird. Sobald die Wassertemperatur 100°C überschreitet muss das warme bzw. heiße Wasser in Drucktanks als Wasser-Speichertankeinrichtung gespeichert werden, um ein Ausdampfen zu vermeiden. Je nach Leistung und Kapazität des A-CAES Systems 1 ergeben sich wiederum verschiedene Druck- und Temperaturniveaus als vorteilhaft für das Gesamtsystem.

Wasser als Speichermedium hat folgende wesentliche Vorteile:
- günstig,
- hohe Verfügbarkeit
- physiologisch unbedenklich
- hohe Wärmekapazität
- keine Alterung

Die Speicherung der Wärme auf höheren Temperaturniveaus ist vorteilhaft, da eine höhere Systemtemperatur einen höheren Systemwirkungsgrad und einen einfacheren Aufbau der rotierenden Maschinen, hier z.B. des Kompressors und der Turbine, ermöglicht, da weniger Zwischenkühlungen bzw. Zwischenüberhitzungen erforderlich sind.

Da Wasser eine Druckbeaufschlagung durch die entsprechenden Temperaturniveaus erfordert, um das Ausdampfen zu vermeiden, ist das Flüssigsalz als zweiter thermischer Energiespeicher bei dem 2-Temperatur-Speichersystem des erfindungsgemäßen A -CAES Systems 1 vorgesehen.

Flüssigsalz hat dabei den Vorteil, dass es drucklos oder annährend drucklos bei deutlich höheren Temperaturen als Wasser gespeichert werden kann, da Wasser eine Siedetemperatur von ca. 100°C aufweist. Des Weiteren ist Flüssigsalz physiologisch unbedenklich und unterliegt keiner technisch relevanten Alterung. Die Menge an Flüssigsalz, die für die Speicherung in entsprechend großen thermischen Salz-Speichertankeinrichtungen erforderlich ist, ist kommerziell ausreichend und außerdem zu einem wirtschaftlichen Preis verfügbar.

Das Flüssigsalz als thermischer Energiespeicher kommt bei dem erfindungsgemäßen A-CAES-System 1 nicht allein, sondern zusammen mit Wasser als weiterem thermischen Energiespeicher zum Einsatz, da die Schmelztemperatur des Flüssigsalzes nicht mit der maximal möglichen Eintrittstemperatur T_{DSmax} der Druckluftspeichereinrichtung 2 vereinbar ist.

Durch die Kombination mit Wasser als zweitem thermischem Energiespeicher wird dieses Problem beseitigt. Wasser als thermischer Energiespeicher umfasst hierbei auch einen wasserbasierten thermischen Energiespeicher.

Um die maximale Lufteinlasstemperatur T_{DSmax} der Druckluftspeichereinrichtung 2 sicherzustellen ist das Nachschalten eines Wärmespeichersystems auf Wasser bzw. Wasserbasis erforderlich. Das Wärmespeichersystem auf Wasser bzw. Wasserbasis weist dabei in dem Ausführungsbeispiel in Fig. 1 die Wasser-Speichertankeinrichtung 15, 18 und wenigstens eine, zwei drei oder mehr Luft/Wasser-Wärmetauschereinrichtungen 11 auf. In dem Beispiel in Fig. 1 sind z.B. drei Luft/Wasser-Wärmetauschereinrichtung 11 vorgesehen zum Kühlen bzw. Zwischenkühlen der durch die Kompressoreinheit 6 komprimierten Luft, so dass diese mit einer vorbestimmten, gewünschten Lufteinlasstemperatur T_{DS} und einem damit verbundenen gewünschten Lufeinlassdruck d_{DS} in der Druckluftspeichereinrichtung 2 gespeichert werden kann.

Der Einsatzbereich der jeweiligen Wasser-Speichertankeinrichtung 15, 18 wird vorzugsweise definiert über eine untere Systemtemperatur T_{System-Salz} des Flüssigsalz-Speichersystems von z.B. T_{System-Salz} = 150°C, und der erforderlichen Einlasstemperatur T_{DS} der Druckluftspeichereinrichtung, z.B. T_{DS} = 40°C.

Die untere Systemtemperatur T_{System-Salz} oder Temperaturgrenze des Flüssigsalzes in dem A-CAES-System 1, wird dabei abhängig von der Schmelztemperatur des eingesetzten Flüssigsalzes bestimmt. Wie zuvor beschrieben, kristallisiert das Flüssigsalz unterhalb der Schmelztemperatur. Es muss daher sichergestellt werden, dass das Flüssigsalz in dem A-CAES-System 1 nicht kristallisiert und dem entsprechend nicht die Schmelztemperatur unterschreitet.

Daher wird bei der Festlegung der unteren Systemtemperatur T_{System-Salz} für das A-CAES-System 1 die Schmelztemperatur des Flüssigsalzes als untere Temperaturgrenze für das Flüssigsalz vorgesehen. Dem entsprechend kann als untere Systemtemperatur T_{System-Salz} die Schmelztemperatur des Flüssigsalzes vorgesehen werden, die nicht unterschritten werden darf, da sonst das Flüssigsalz kristallisiert. Vorzugsweise kann als untere Systemtemperatur T_{System-Salz} auch die zuvor genannte Puffertemperatur vorgesehen werden. Bei der Puffertemperatur ist der Schmelztemperatur des Flüssigsalzes vorzugsweise noch ein zusätzlicher, vorbestimmter Temperaturpuffer hinzugefügt bzw. berücksichtigt. Die Puffertemperatur als untere Systemtemperatur T_{System-Salz} für das A-CAES-System 1 ist vorzugsweise so gewählt, dass sie, wie zuvor beschrieben, ausreichend oberhalb der Schmelztemperatur des Flüssigsalzes liegt, so dass das Flüssigsalz nicht ungewollt kristallisieren kann und andererseits vorzugsweise möglichst viel Wärmeenergie bzw. Kompressionswärme aufnehmen und speichern kann.

Durch die Nutzung von zwei Temperaturniveaus in dem erfindungsgemäßen A-CAES-System 1 kann der Vorteil eines kostengünstigen Hochtemperaturwärmespeichers auf Flüssigsalzbasis, hier insbesondere die Warm bzw. Heiß-Flüssigsalz-Speichertankeinrichtung 25, mit einer unteren Temperaturgrenze, d.h. unteren Systemtemperatur T_{System-Salz} von beispielsweise T_{System-Salz} = 150°C (Puffertemperatur) genutzt werden. Die Erfindung ist jedoch nicht auf eine untere Temperaturgrenze T_{System-Salz} von T_{System-Salz} = 150°C beschränkt. Je nach verwendetem Flüssigsalz und gewünschtem Temperaturpuffer kann die Temperaturgrenze T_{System-Salz} größer oder kleiner als 150°C sein. Gleiches gilt für die Einlasstemperatur T_{DS} der Druckluftspeichereinrichtung 2, diese kann ebenfalls größer oder kleiner als 40°C sein, je nach Funktion und Einsatzzweck, sowie Art der Druckluftspeichereinrichtung 2, d.h. überirdischer Druckluftspeichertank, unterirdischer Druckluftspeichertank oder Kavität, wie z.B. Salzstock, usw..

Die untere Systemtemperatur T_{System-Salz} des Flüssigsalzes, hier z.B. der Puffertemperatur T_{System-Salz} = 150°C in dem Beispiel in Fig. 1, dient dabei hauptsächlich der Regelung Einlasstemperatur T_{DS} in die Druckluftspeichereinrichtung 2, da dieses über die Massenströme nach Stand der Technik einfach geregelt werden kann.

Außerdem wird eine hohe Flexibilität der darstellbaren Druckluftniveaus erreicht. Eine Einspeicherung der gesamten Energie auf einem Temperaturniveau von z.B. 150°C hätte zur Folge, dass viele Zwischenüberhitzungen und bzw. Zwischenkühlungen gebraucht werden. Dadurch würde der BOP-Aufwand wesentlich erhöht. Eine Absenkung des Temperaturniveaus beim Einspeichern bewirkt auch immer einen geringeren Wirkungsgrad der Anlage.

Das Einspeichern der Energie auf einem höheren Temperaturniveau von z.B. 450°C bringt den Vorteil, dass mit dem System ein höherer Wirkungsgrad erreicht werden kann. Durch die geringere Anzahl an Zwischenüberhitzungen und Zwischenkühlungen verringert sich der BOP-Aufwand. Dies könnte jedoch eine geringere Flexibilität der darstellbaren Druckluftniveaus zur Folge haben. Darüber hinaus kann die spezifische Energieausbeute der Druckluft durch ein höheres Temperaturniveau erhöht werden, was bei gleicher Energiespeicherkapazität einen kleineren Luftspeicher erfordert.

Durch die Kombination der beiden Speichertechnologien aus Wasser und Flüssigsalz gemäß der Erfindung, kann individuell unter Beachtung der jeweiligen technischen Ausführbarkeit, wie z.B. maximal ausführbare Strömungsquerschnitte des jeweiligen Rohrleitungssystems, den Kosten und dem Wirkungsgrad das A-CAES-System 1 festgelegt werden.

In dem Ausführungsbeispiel des A-CAES-Systems 1 in Fig. 1, wird Luft, hier Umgebungsluft mit einer Umgebungslufttemperatur als Eingangstemperatur T_{E} und einem Umgebungsluftdruck als Eingangsdruck d_{E}, aufgenommen oder eingesaugt und in dem ersten Kompressor 38, z.B. einem Niederdruck-Kompressor, der Kompressoreinheit 6 auf einen Druck d_{K1} komprimiert mit einer Temperatur T_{K1}. Die Luft wird durch den ersten Kompressor 38 von der Eingangstemperatur T_{E} auf die Temperatur T_{K1} durch die Kompression erwärmt bzw. erhitzt.

In einer anschließenden Wärmetauschereinrichtung, hier z.B. einer Luft/Flüssigsalz-Wärmetauschereinrichtung 12, wird der komprimierten Luft Wärmeenergie bzw. Kompressionswärme entzogen und die Luft auf eine Temperatur T_{WÄ-S1} gekühlt. Die Luft/Flüssigsalz-Wärmetauschereinrichtung 12 nimmt Kompressionswärme bzw. Wärmeenergie der Luft auf und leitet diese über das Flüssigsalz-Rohrleitungssystem 28 weiter an das Flüssigsalz-Speichersystem 14, hier die Warm-Flüssigsalz-Speichertankeinrichtung 25.

In der in Fig. 1 anschließenden optionalen zusätzlichen Luft/Wasser-Wärmetauschereinrichtung 11 wird die komprimierte Luft nochmals weiter abgekühlt auf eine Temperatur T_{WÄ-W1}. Die erste Luft/Wasser-Wärmetauschereinrichtung 11 nimmt somit ebenfalls Kompressionswärme bzw. Wärmeenergie der Luft auf und leitet diese über das Wasser-Rohrleitungssystem 21 weiter an das Wasser-Speichersystem 13, hier die Warm-Wasser-Speichertankeinrichtung 18.

In einem zweiten Kompressor 39, z.B. einem HochdruccKompressor, der Kompressoreinheit 6 wird die Luft weiter auf einen Druck d_{K2} komprimiert. Durch die Kompression wird die Luft dabei wieder erwärmt bzw. erhitzt auf eine Temperatur T_{K2}.

In der anschließenden Wärmetauschereinrichtung, hier der weiteren Luft/Flüssigsalz-Wärmetauschereinrichtung 12, wird der komprimierten Luft Wärmeenergie bzw. Kompressionswärme wieder entzogen und die Luft dabei auf eine Temperatur T_{WÄ-S2} gekühlt. Die Luft/Flüssigsalz-Wärmetauschereinrichtung 12 bzw. das Flüssigsalz nimmt Kompressionswärme bzw. Wärmeenergie der Luft auf und leitet das durch die Kompressionswärme erwärmte Flüssigsalz über das Flüssigsalz-Rohrleitungssystem 28 an das Flüssigsalz-Speichersystem 14 und genauer den Warm-Flüssigsalz-Speichertankeinrichtung 25 weiter. Dort wird das durch die Kompressionswärme bzw. Wärmeenergie erwärmte oder erhitzte Flüssigsalz mit der Temperatur T_{Salz-Warm} gespeichert und kann bei Bedarf abgegeben werden zum Erwärmen der Luft, wenn diese wieder expandiert wird. Da das Flüssigsalz der Luft/Flüssigsalz-Wärmetauschereinrichtung 12 nicht unterhalb die Systemtemperatur T_{System-Salz} des Flüssigsalzes, hier z.B. der Puffertemperatur T_{System-Salz} = 150°C in dem Beispiel in Fig. 1, fallen darf, ist zwischen der letzten Luft/Flüssigsalz-Wärmetauschereinrichtung 12 und der Druckluftspeichereinrichtung 2 eine Luft/Wasser-Wärmetauschereinrichtung 11 geschaltet. Diese Luft/Wasser-Wärmetauschereinrichtung 11 dient, wie zuvor ausgeführt, hauptsächlich der Regelung Einlasstemperatur T_{DS} in die Druckluftspeichereinrichtung 2 und erlaubt ein Abkühlen der Luft vorzugsweise bis auf die Einlasstemperatur T_{DS}.

In der Luft/Wasser-Wärmetauschereinrichtung 11 in Fig. 1 wird daher die komprimierte Luft nochmals weiter gekühlt auf eine Temperatur T_{Wä-W2} bei einem Druck d_{WÄ-W2}. Die Temperatur T_{Wä-W2} entspricht dabei vorzugsweise der Einlasstemperatur T_{DS} der Druckluftspeichereinrichtung 2, z.B. T_{DS} = 40°C, und der Druck d_{WÄ-W2} dem entsprechenden Einlassdruck d_{DS} in der Druckluftspeichereinrichtung, d.h. der Speicherdruck der Luft. Daher sind in dem Beispiel in Fig. 1 keine weiteren Kompressions- und Zwischenkühlungsschritte notwendig, wie im Stand der Technik.

In dem in Fig. 1 gezeigten Ausführungsbeispiel kann wahlweise zusätzlich ein Luft-Trimmkühler 42 mit einem Lufteinlass und einem Luftauslass vorgesehen sein zum Ausgleichen einer möglichen Temperaturdifferenz zwischen der durch die Luft/Wasser-Wärmetauschereinrichtung 11 gekühlten Luft und der in der Druckluftspeichereinrichtung 2 gespeicherten Luft.

Die Luft/Wasser-Wärmetauschereinrichtung 11 nimmt ebenfalls Kompressionswärme bzw. Wärmeenergie der Luft auf und leitet diese über das Wasser-Rohrleitungssystem 21 in Fig. 1 an das zugeordnete Wasser-Speichersystem 13, und genauer die Warm-Wasser-Speichertankeinrichtung 18 weiter. Dort wird das durch die Wärmeenergie bzw. Kompressionswärme erwärmte oder erhitzte Wasser mit der Temperatur T_{Wasser-Warm} gespeichert und kann bei Bedarf abgegeben werden zum Erwärmen der Luft wenn diese wieder expandiert wird.

Wird nun Energie zum Betreiben der Expandereinheit 3 benötigt, so wird die Luft aus der Druckspeichereinrichtung 2 der Expandereinheit 3 zugeführt und in dieser in einer oder mehreren Stufen expandiert, bis die Luft mit einer vorbestimmten Auslasstemperatur T_{A}, z.B. der Umgebungslufttemperatur, und einem vorbestimmten Auslassdruck d_{A}, z.B. dem Umgebungsluftdruck, wieder an die Umgebung abgegeben wird oder werden kann.

In dem Beispiel in Fig. 1 wird die Luft nach dem Verlassen der Druckluftspeichereinrichtung in wenigstens einer Wärmetauschereinrichtung 2 erwärmt, hier zuerst in der einen Luft/Wasser-Wärmetauschereinrichtung 11 auf eine Temperatur T_{WÄ-W3} und anschließend weiter in einer Luft/Flüssigsalz-Wärmetauschereinrichtung 12 auf eine Temperatur T_{WÄ-S3} und dann dem Expander 40 zum Expandieren der Luft zugeführt.

Zum Erwärmen der Luft durch die Luft/Wasser-Wärmetauschereinrichtung 11 wird dabei das gespeicherte Wasser aus der Warm-Wasser-Speichertankeinrichtung 18 genutzt und hierzu der Luft/Wasser-Wärmetauschereinrichtung 11 durch das Wasser-Rohrleitungssystem 21 zugeführt, welche die Wärmeenergie des Wassers aus der Warm-Wasser-Speichertankeinrichtung 18 an die Luft abgibt zum Erwärmen der Luft auf die Temperatur T_{WÄ-W3}.

Entsprechend wird zum Erwärmen der Luft durch die Luft/Flüssigsalz-Wärmetauschereinrichtung 12 das Flüssigsalz aus der Warm-Flüssigsalz-Speichertankeinrichtung 25 genutzt und hierzu der Luft/Flüssigsalz-Wärmetauschereinrichtung 12 durch das Flüssigsalz-Rohrleitungssystem 28 zugeführt, welche die Wärmeenergie des Flüssigsalzes aus der Warm-Flüssigsalz-Speichertankeinrichtung 25 an die Luft abgibt zum Erwärmen der Luft auf die Temperatur T_{WÄ-S3}.

Die auf die Temperatur T_{WÄ-S3} erwärmte Luft wird in dem Expander 40 expandiert. Dabei kühlt die Luft wieder ab und wird daher in der wenigstens einen, anschließenden Wärmetauschereinrichtung, z.B. hier einer weiteren Luft/Flüssigsalz-Wärmetauschereinrichtung 12, zuerst wieder erwärmt bzw. erhitzt auf die Temperatur T_{WÄ-S4}. In Der Luft/Flüssigsalz-Wärmetauschereinrichtung 12 wird ebenfalls erwärmtes bzw. heißes Flüssigsalz aus der Warm-Flüssigsalz-Speichertankeinrichtung 25 genutzt und hierzu der Luft/Flüssigsalz-Wärmetauschereinrichtung 12 durch das Flüssigsalz-Rohrleitungssystem 28 zugeführt.

In dem zweiten Expander 41 wird die Luft wieder expandiert auf den Ausgangsdruck d_{A} und die Ausgangstemperatur T_{A}, z.B. den Umgebungsluftdruck und die Umgebungstemperatur, hier den Umgebungsluftdruck als Eingangsdruck d_{E}.

In dem in Fig. 1 gezeigten Beispiel kann ein Luft-Bypassleitungsystem vorgesehen sein, mit welchem die Luft aus der Druckluftspeichereinrichtung 2 statt dem Lufteinlass 4 des ersten Expanders 40 dem Lufteinlass 4 des zweiten Expanders 41 zugeführt wird, wobei die Luft dabei zuerst in der wenigstens einen vorgeschalteten Wärmetauschereinrichtung, hier der Luft-Flüssigsalz-Wärmetauschereinrichtung 12, erwärmt bzw. erhitzt wird, bevor sie dem zweiten Expander 41 durch seinen Lufteinlass 4 zugeführt wird.

Die Flüssigsalz-Speichertankeinrichtung 25 hat den Vorteil, dass das Flüssigsalz bei einer deutlich höheren Temperatur in einem drucklosen oder in einem im Wesentlichen drucklosen Speichertank gespeichert werden kann als Wasser. Daher kann das Flüssigsalz größere Mengen an Wärmeenergie aus der komprimierten Luft aufnehmen und diese anschließend wieder an die zu expandierende Luft abgeben, wobei für die Speicherung des Flüssigsalzes dabei keine teuren Drucktanks erforderlich sind, wie bei Wasser.

In dem ersten Expander 40, d.h. der ersten Expansionsstufe, wird die Luft anschließend expandiert. Da die Luft beim Expandieren abkühlt, wird der Luft nach der ersten Expansionsstufe 40, Wärmeenergie über die zugeordnete Luft/Flüssigsalz-Wärmetauschereinrichtung 12 zugeführt und die Luft daher auf die Temperatur T_{EX-1} erwärmt. Die weitere Luft/Flüssigsalz-Wärmetauschereinrichtung 12 dient wie auch die weitere Luft/Wasser-Wärmetauschereinrichtung 11 zum Zuführen von davor abgeführter Kompressionswärme der Luft, die beim Komprimieren der Luft in der vorherigen Kompressionseinheit entstanden ist.

Nachdem die in dem ersten Expander 40 expandierte Luft in dem zweiten Expander 41 weiter expandiert wird, wird der Luft zunächst wieder Wärme zugeführt in einem dritten Zwischenüberhitzungsschritt mittels der weiteren Luft/Flüssigsalz-Wärmetauschereinrichtung 12. Die Luft wird anschließend in dem zweiten Expander 41 in dem Beispiel in Fig. 1 auf die Auslasstemperatur T_{A} und den Auslassdruck d_{A} expandiert, welcher beispielsweise der Umgebungslufttemperatur und dem Umgebungsluftdruck entsprechen.

In dem in Fig. 1 gezeigten Beispiel kann der erste Expander 40 beispielsweise durch wenigstens eine entsprechende zusätzliche Bypass-Leitung 43 des Luft-Rohrleitungssystems 37 umgangen und die Luft nach dem Verlassen der Druckspeichereinrichtung 2 stattdessen an den zweiten Expander 41 geleitet werden. Dabei kann die Luft in der wenigstens einen Wärmetauschereinrichtung, hier der Luft/Flüssigsalz-Wärmetauschereinrichtung 12, zuerst erwärmt bzw. erhitzt werden, bevor die Luft anschließend dem Lufteinlass 4 des zweiten Expanders 41 zugeführt wird.

Des Weiteren kann wahlweise zusätzlich ein Wasser-Trimmkühler 44 mit einem Wassereinlass 45 und einem Wasserauslass 46 vorgesehen sein zum Ausgleichen einer möglichen Temperaturdifferenz zwischen dem Wasser, welches aus der jeweiligen Luft/Wasser-Wärmetauschereinrichtung 11, genauer der jeweiligen Luft/Wasser-Wärmetauschereinrichtung 11 der Expandereinheit 3, über das Wasser-Rohrleitungssystem 21 der Kalt-Wasser Speichertankeinrichtung 15 zugeführt wird. Dadurch kann sichergestellt werden, dass kein wärmeres Wasser in die Kalt-Wasser-Speichertankeinrichtung 15 zurückgeführt wird, sondern dieses Wasser dieselbe Temperatur aufweist, wie Wasser in der Kalt-Wasser-Speichertankeinrichtung 15.

Weiter kann wahlweise zusätzlich ein Flüssigsalz-Trimmkühler 47 mit einem Flüssigsalzeinlass 48 und einem Flüssigsalzauslass 49 vorgesehen sein zum Ausgleichen einer möglichen Temperaturdifferenz zwischen dem Flüssigsalz, welches aus der jeweiligen Luft/Flüssigsalz-Wärmetauschereinrichtung 12, genauer der jeweiligen Luft/Flüssigsalz-Wärmetauschereinrichtung 12 der Expandereinheit 3, über das Flüssigsalz-Rohrleitungssystem 28 der Kalt-Flüssigsalz-Speichertankeinrichtung 22 zugeführt wird. Dadurch kann sichergestellt werden, dass kein wärmeres Flüssigsalz in den Kalt-Flüssigsalz-Speichertankeinrichtung 15 zurückgeführt wird, sondern dieses Flüssigsalz dieselbe Temperatur aufweist, wie Flüssigsalz der Kalt-Flüssigsalz-Speichertankeinrichtung 15.

Im Vergleich zu einem wasserbasierten 200°C Druckluftspeichersystem ergeben sich folgende Vorteile:
- Durch die reduzierte Temperatur kann der Betriebsdruck der Wasserdrucktanks signifikant verringert werden (z.B.: psatt (150°)= 4,8 bara, psatt (200°C)=15,5 bara).
- Gegenüber der reinen Wasserlösung kommen deutlich weniger Drucktanks zum Einsatz, da der wesentliche Teil der Energie im Salz gespeichert wird, welche darüber hinaus einen deutlich geringeren Designdruck aufweisen.
- die Abwärme der Anlage ist auf einem höheren Temperaturniveau von ca. 150°C verfügbar ist, welches für weitere Anwendungen, wie z.B. Fernwärme, Trocknungsprozesse usw. deutlich besser verwertbar ist.
- Höhere RTE, wegen höherer Systemtemperatur
- Spezifisch höhere Energieausbeute der Druckluft durch ein höheres Temperaturniveau, was bei gleicher Energiespeicherkapazität einen kleineren Luftspeicher erfordert
- geringere Anzahl an Zwischenüberhitzungen / bzw. Zwischenkühlungen verringert den BOP-Aufwand. Daraus resultiert ein geringerer Druckverlust in der ACAES Anlage.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar. Die Erfindung ist dabei nicht auf die Anzahl von höchstens einem oder zwei Kompressoren und/oder höchstens einem oder zwei Expandern beschränkt. Es können auch mehr Kompressoren und/oder Expander vorgesehen werden. Allerdings kann die Zahl der Kompressoren und Expander und damit die Zahl der Kompressesions- bzw. Expanderstufen mit den damit verbundenen Zwischenkühlungen bzw. Zwischenüberhitzungen durch den Einsatz wenigstens einer Luft/Flüssigsalz-Wärmespeichereinrichtung zu der wenigstens einen Luft/Wasser-Wärmetauschereinrichtung erheblich reduziert werden, da das Flüssigsalz sehr viel mehr Wärmeenergie als Wasser aufnehmen und drucklos oder im Wesentlichen drucklos in dem Flüssig-Speichersystem gespeichert werden kann.

## Patentansprüche

1. Ein adiabatisches Druckluft-Energiespeichersystem (A-CAES-System) (1) aufweisend:
- eine Kompressoreinheit (6), die ausgebildet ist eine zugeführte Luft zu komprimieren,
- eine Druckluftspeichereinrichtung (2), die ausgebildet ist die von der Kompressoreinheit (6) zugeführte komprimierte Luft zu speichern,
- eine Expandereinheit (3), die ausgebildet ist aus der Druckluftspeichereinrichtung (2) zugeführte Luft zu expandieren,
- ein Luft-Rohrleitungssystem (37), welches die Kompressoreinheit (6) mit der Druckluftspeichereinrichtung (2) und die Druckluftspeichereinrichtung (2) mit der Expandereinheit (3) verbindet zum Leiten von Luft in die Kompressoreinheit (6) und aus der Kompressoreinheit (6) in die Druckluftspeichereinrichtung (2) und aus der Druckluftspeichereinrichtung (2) in die Expandereinheit (3) und aus der Expandereinheit (3) nach dem Expandieren der Luft,
- wenigstens eine erste Luft/Flüssigsalz-Wärmetauschereinrichtung (12), welche derart ausgebildet ist Wärmeenergie aus der durch die Kompressoreinheit (6) komprimierten Luft aufzunehmen und die Luft auf eine erste Temperatur (T_{WÄ-S2}) zu kühlen, und
- wenigstens eine der ersten Luft/Flüssigsalz-Wärmetauschereinrichtung (12) in dem Luft-Rohrleitungssystem (37) nachgeschaltete erste Luft/Wasser-Wärmetauschereinrichtung (11), welche derart ausgebildet ist Wärmeenergie aus der durch die Kompressoreinheit (6) komprimierten Luft aufzunehmen und die Luft auf eine zweite Temperatur (T_{WÄ-W2}) weiter abzukühlen, welche niedriger als die erste Temperatur (T_{WÄ-S2}) ist zum Zuführen der Luft der Druckluftspeichereinrichtung (2).

2. Adiabatisches Druckluft-Energiespeichersystem nach Anspruch 1, wobei die zweite Temperatur (T_{WÄ-W2}) unterhalb der Schmelztemperatur des Flüssigsalzes liegt und vorzugsweise der Einlasstemperatur (T_{DS}) der Druckluftspeichereinrichtung (2) entspricht, wobei die Druckluftspeichereinrichtung (2) wenigstens einen unterirdischen Druckluftspeichertank, wenigstens einen überirdischen Druckluftspeichertank und/oder wenigstens eine Kaverne, insbesondere einen Salzstock, aufweist.

3. Adiabatisches Druckluft-Energiespeichersystem nach einem der vorangehenden Ansprüche, wobei die Kompressoreinheit (6) wenigstens einen oder zwei Kompressoren (38, 39) mit jeweils einem Lufteinlass (7) und einem Luftauslass (8) aufweist, wobei die Kompressoren (38, 39) vorzugsweise in Strömungsrichtung in einer Reihe hintereinander geschaltet durch das Luft-Rohrleitungssystem (37) miteinander verbunden sind, wobei Luft durch einen Lufteinlass (7) des ersten Kompressors (38), vorzugsweise einem Niederdruckkompressor, der Kompressoreinheit (6) zugeführt wird und die Luft aus einem Luftauslass (8) des letzten Kompressors (39), vorzugsweise einem Hochdruckkompressor, aus der Kompressoreinheit (6) dem Lufteinlass (51) der Druckluftspeichereinrichtung (2) zugeführt wird, wobei zwischen dem letzten Kompressor (39) und der Druckluftspeichereinrichtung (2) in Strömungsrichtung die erste Luft/Flüssigsalz-Wärmetauschereinrichtung (12) und erste Luft/Wasser-Wärmetauschereinrichtung (11) vorgesehen sind.

4. Adiabatisches Druckluft-Energiespeichersystem nach Anspruch 3, wobei in Strömungsrichtung zwischen wenigstens zwei der Kompressoren (38, 39) der Kompressoreinheit (6) wenigstens eine weitere, zweite Wärmetauschereinrichtung zum Kühlen der Luft vorgesehen ist, die durch das Luft-Rohrleitungssystem (37) in einer Reihe mit den beiden Kompressoren (38, 39) verbunden ist, wobei die Wärmetauschereinrichtung eine zweite Luft/Flüssigsalz-Wärmetauschereinrichtung (12) oder eine zweite Luft/Wasser-Wärmetauschereinrichtung (11) ist, wobei vorzugsweise zwischen den beiden Kompressoren (38, 39) in Strömungsrichtung insbesondere zuerst die zweite Luft/Flüssigsalz-Wärmetauschereinrichtung (12) und anschließend die zweite Luft/Wasser-Wärmetauschereinrichtung (11) vorgesehen und über das Luft-Rohrleitungssystem (37) mit den beiden Kompressoren (38, 39) in einer Reihe hintereinander geschaltet verbunden sind.

5. Adiabatisches Druckluft-Energiespeichersystem nach einem der vorangehenden Ansprüche, wobei das adiabatische Druckluft-Energiespeichersystem (1) aufweist:
- eine dritte Luft/Flüssigsalz-Wärmetauschereinrichtung (12), welche derart ausgebildet ist Wärmeenergie an die in der Expandereinheit (6) zu expandierende Luft abzugeben und diese zu erwärmen, und/oder
- eine dritte Luft/Wasser-Wärmetauschereinrichtung (11), welche derart ausgebildet ist Wärmeenergie an die in der Expandereinheit (6) zu expandierende Luft abzugeben und diese zu erwärmen,
wobei das Luft-Rohrleitungssystem (37) in Strömungsrichtung die Druckluftspeichereinrichtung (2) mit der Expandereinheit (6) verbindet, wobei die dritte Luft/Flüssigsalz-Wärmetauschereinrichtung (12) und/oder die dritte Luft/Wasser-Wärmetauschereinrichtung (11) in Strömungsrichtung zwischen der Druckluftspeichereinrichtung (2) und der Expandereinheit (3) in dem Luft-Rohrleitungssystem (37) angeordnet ist bzw. sind zum Erwärmen der Luft aus der Druckluftspeichereinrichtung (2) und zum Zuführen der erwärmten Luft der Expandereinheit (3) .

6. Adiabatisches Druckluft-Energiespeichersystem nach einem der vorangehenden Ansprüche, wobei die Expandereinheit (3) wenigstens einen oder zwei Expander (40, 41) mit jeweils einem Lufteinlass (4) und einem Luftauslass (5) aufweist, wobei die Expander (40, 41) vorzugsweise in Strömungsrichtung in einer Reihe hintereinander geschaltet durch das Luft-Rohrleitungssystem (37) miteinander verbunden sind, wobei Luft durch einen Lufteinlass (4) des ersten Expanders (40), vorzugsweise eines Hochdruckexpanders, der Expandereinheit (3) zugeführt wird und die Luft aus einem Luftauslass (5) des letzten Expanders (41), vorzugsweise eines Niederdruckexpanders, aus der Expandereinheit (3) wieder herausgeführt wird zum Abgeben der Luft insbesondere an die Umgebungsluft.

7. Adiabatisches Druckluft-Energiespeichersystem Anspruch 6,
wobei zwischen der Druckluftspeichereinrichtung (2) und dem ersten Expander (40) in Strömungsrichtung die dritte Luft/Wasser-Wärmetauschereinrichtung (11) und/oder dritte Luft/Flüssigsalz-Wärmetauschereinrichtung (12) in dem Luft-Rohrleitungssystem (37) vorgesehen ist bzw. sind zum Erwärmen der Luft zum Expandieren der erwärmten Luft durch den ersten Expander (40), und
wobei vorzugsweise in Strömungsrichtung zwischen wenigstens zwei der Expander (40, 41) der Expandereinheit (3) wenigstens eine vierte Wärmetauschereinrichtung zum Erwärmen der Luft vorgesehen ist, die durch das Luft-Rohrleitungssystem (37) in einer Reihe mit den beiden Expandern (40, 41) verbunden ist, wobei die vierte Wärmetauschereinrichtung vorzugsweise eine vierte Luft/Flüssigsalz-Wärmetauschereinrichtung (12) ist.

8. Adiabatisches Druckluft-Energiespeichersystem nach einem der vorangehenden Ansprüche, wobei das adiabatische Druckluft-Energiespeichersystem (1) aufweist:
- ein Flüssigsalz-Speichersystem (14), welches eine Kalt-Flüssigsalz-Speichertankeinrichtung (22) zum Speichern von Flüssigsalz zumindest bei seiner Schmelztemperatur oder vorzugsweise einer vorbestimmten Puffertemperatur oberhalb seiner Schmelztemperatur, und
eine Warm-Flüssigsalz-Speichertankeinrichtung (25) aufweist zum Speichern des durch die jeweilige mit ihr verbundene Luft/Flüssigsalz-Wärmetauschereinrichtung (12) erwärmten Flüssigsalzes auf eine Temperatur oberhalb der Temperatur des Flüssigsalzes der Kalt-Flüssigsalz-Speichertankeinrichtung (22),
wobei vorzugsweise die Kalt-Flüssigsalz-Speichertankeinrichtung (22) und/oder die Warm-Flüssigsalz-Speichertankeinrichtung (25) eine drucklose oder im Wesentlichen Speichertankeinrichtung ist bzw. sind.

9. Adiabatisches Druckluft-Energiespeichersystem nach Anspruch 7 oder 8, wobei das adiabatische Druckluft-Energiespeichersystem (1) ein Flüssigsalz-Rohrleitungssystem (28) aufweist, welches einen Flüssigsalz-Auslass (24) der Kalt-Flüssigsalz-Speichertankeinrichtung (22) in Strömungsrichtung mit einem Flüssigsalz-Einlass (33) der wenigstens ersten und/oder zweiten Luft/Flüssigsalz-Wärmetauschereinrichtung (12) verbindet zum Zuführen und Erwärmen des Flüssigsalzes, und
wobei das Flüssigsalz-Rohrleitungssystem (28) einen Flüssigsalz-Auslass (34) der wenigstens ersten und/oder zweiten Luft/Flüssigsalz-Wärmetauschereinrichtung (12) mit einem Flüssigsalz-Einlass (26) der Warm-Flüssigsalz-Speichertankeinrichtung (25) verbindet zum Zuführen und Speichern des erwärmten Flüssigsalzes in der Warm-Flüssigsalz-Speichertankeinrichtung (25), und
wobei vorzugsweise das Flüssigsalz-Rohrleitungssystem (28) einen Flüssigsalz-Auslass (27) der Warm-Flüssigsalz-Speichertankeinrichtung (25) mit einem Flüssigsalz-Einlass (33) der wenigstens dritten oder vierten Luft/Flüssigsalz-Wärmetauschereinrichtung (12) verbindet zum Zuführen und Kühlen des Flüssigsalzes, und
wobei vorzugsweise das Flüssigsalz-Rohrleitungssystem (28) einen Flüssigsalz-Auslass (34) der wenigstens dritten oder vierten Luft/Flüssigsalz-Wärmetauschereinrichtung (12) mit einem Flüssigsalz-Einlass (23) der Kalt-Flüssigsalz-Speichertankeinrichtung (22) verbindet zum Zuführen und Speichern des gekühlten Flüssigsalzes in der Kalt-Flüssigsalz-Speichertankeinrichtung (22).

10. Adiabatisches Druckluft-Energiespeichersystem nach einem der vorangehenden Ansprüche, wobei das adiabatische Druckluft-Energiespeichersystem (1) aufweist:
- ein Wasser-Speichersystem (13), welches eine Kalt-Wasser-Speichertankeinrichtung (15) zum Speichern von Wasser und eine Warm-Wasser-Speichertankeinrichtung (18) aufweist zum Speichern des durch die jeweilige mit ihr verbundene Luft/Wasser-Wärmetauschereinrichtung (11) erwärmten Wassers auf eine Temperatur oberhalb der Temperatur des Wassers in der Kalt-Wasser-Speichertankeinrichtung (15),
wobei vorzugsweise die Kalt-Wasser-Speichertankeinrichtung (15) als eine Speichertankeinrichtung ausgebildet ist, Wasser bei einer Temperatur in einem Bereich von 0°C bis 70°C und drucklos bzw. atmosphärisch zu speichern und/oder die Warm-Wasser-Speichertankeinrichtung (18) als eine Speichertankeinrichtung ausgebildet ist, Wasser bei einer Temperatur in einem Bereich von 120°C bei 2bar(a) bis 170°C bei 7,9bar(a) zu speichern.

11. Adiabatisches Druckluft-Energiespeichersystem nach Anspruch 10, wobei das adiabatische Druckluft-Energiespeichersystem (1) ein Wasser-Rohrleitungssystem (21) aufweist, welches einen Wasser-Auslass (17) der Kalt-Wasser-Speichertankeinrichtung (15) in Strömungsrichtung mit einem Wasser-Einlass (29) der wenigstens ersten und/oder zweiten Luft/Wasser-Wärmetauschereinrichtung (11) verbindet zum Zuführen und Erwärmen des Wassers, und
wobei das Wasser-Rohrleitungssystem (21) einen Wasser-Auslass (20) der wenigstens ersten und/oder zweiten Luft/Wasser-Wärmetauschereinrichtung (11) mit einem Wasser-Einlass (19) der Warm-Wasser-Speichertankeinrichtung (18) verbindet zum Zuführen und Speichern des erwärmten Wassers in der Warm-Wasser-Speichertankeinrichtung (18), und
wobei vorzugsweise das Wasser-Rohrleitungssystem (21) einen Wasser-Auslass (20) der Warm-Wasser-Speichertankeinrichtung (18) mit einem Wasser-Einlass der wenigstens dritten Luft/Wasser-Wärmetauschereinrichtung (11) verbindet zum Zuführen und Kühlen des erwärmten Wassers, und
wobei vorzugsweise das Wasser-Rohrleitungssystem (21) einen Wasser-Auslass (30) der wenigstens dritten Luft/Wasser-Wärmetauschereinrichtung (11) mit einem Wasser-Einlass (16) der Kalt-Wasser-Speichertankeinrichtung (15) verbindet zum Zuführen und Speichern des gekühlten Wassers in der Kalt-Wasser-Speichertankeinrichtung (15).

12. Adiabatisches Druckluft-Energiespeichersystem nach Anspruch 11, wobei das adiabatische Druckluft-Energiespeichersystem (1) aufweist:
- einen Wasser-Trimmkühler (44), wobei der Wasser-Trimmkühler (44) in Strömungsrichtung zwischen der dritten oder letzten Luft/Wasser-Wärmetauschereinrichtung (11) und der Kalt-Wasser-Speichertankeinrichtung (15) in dem Wasser-Rohrleitungssystem (21) vorgesehen ist zum Ausgleichen einer Temperaturdifferenz zwischen dem durch die dritte oder letzte Luft/Wasser-Wärmetauschereinrichtung (11) gekühlten Wassers und dem in der Kalt-Wasser-Speichertankeinrichtung (15) gespeicherten Wassers; und/oder
- einen Flüssigsalz-Trimmkühler (47), wobei der Flüssigsalz-Trimmkühler (47) in Strömungsrichtung zwischen der vierten oder letzten Luft/Flüssigsalz-Wärmetauschereinrichtung (12) und der Kalt-Flüssigsalz-Speichertankeinrichtung (22) in dem Flüssigsalz-Rohrleitungssystem (28) vorgesehen ist zum Ausgleichen einer Temperaturdifferenz zwischen dem durch die vierte oder letzte Luft/Flüssigsalz-Wärmetauschereinrichtung (12) gekühlten Flüssigsalz und dem in der Kalt-Flüssigsalz-Speichertankeinrichtung (22) gespeicherten Flüssigsalz, und/oder
- einen Luft-Trimmkühler (42), wobei der Luft-Trimmkühler (42) in Strömungsrichtung zwischen der letzten Luft/Wasser-Wärmetauschereinrichtung (11) vor der Druckluftspeichereinrichtung (2) und der Druckluftspeichereinrichtung (2) in dem Luft-Rohrleitungssystem (37) vorgesehen ist zum Ausgleichen einer Temperaturdifferenz zwischen der in dieser letzten Luft/Wasser-Wärmetauschereinrichtung (11) gekühlten Luft und der in der Druckluftspeichertankeinrichtung (22) gespeicherten Luft.

13. Verfahren zur adiabatischen Druckluftenergiespeicherung, insbesondere mittels eines adiabatischen Druckluft-Energiespeichersystem nach einem der vorangehenden Ansprüche, wobei das Verfahren die Schritte aufweist:
- Komprimieren von Luft, insbesondere Umgebungsluft in einer Kompressoreinheit,
- Kühlen der Luft in einer ersten Luft/Flüssigsalz-Wärmetauschereinrichtung (12) auf eine erste Temperatur (T_{WÄ-S2}), und Zuführen und Speichern der Luft in einer Druckluftspeichereinrichtung (2).

14. Verfahren nach Anspruch 13, wobei das Verfahren die Schritte aufweist:
- nach dem Kühlen der Luft in der ersten Luft/Flüssigsalz-Wärmetauschereinrichtung (12) auf eine erste Temperatur (T_{WÄ-S2}) vorzugsweise Zuführen und Kühlen der Luft in einer ersten Luft/Wasser-Wärmetauschereinrichtung (11) auf eine zweite Temperatur (T_{WÄ-W2}), welche niedriger als die erste Temperatur (T_{WÄ-S2}) ist und Zuführen und Speichern der Luft in einer Druckluftspeichereinrichtung (2), und/oder
- Zuführen von Luft aus der Druckluftspeichereinrichtung einer weiteren Luft/Flüssigsalz-Wärmetauschereinrichtung (12) und/oder Luft/Wasser-Wärmetauschereinrichtung (11), welche derart ausgebildet ist Wärmeenergie an die Luft abzugeben und diese zu erwärmen, und
- Zuführen der erwärmten Luft einer Expandereinheit zum Erwärmen der Luft zum Expandieren der Luft in der Expandereinheit.

15. Verfahren nach Anspruch 13 oder 14, wobei das Verfahren die Schritte aufweist:
- Speichern des durch die erste Luft/Flüssigsalz-Wärmetauschereinrichtung (12) erwärmten Flüssigsalzes in einem Flüssigsalz-Speichersystem, wobei das Flüssigsalz-Speichersystem vorzugsweise mit der weiteren Luft/Flüssigsalz-Wärmetauschereinrichtung derart gekoppelt ist zum Zuführen gespeicherten Flüssigsalzes aus dem Flüssigsalz-Speichersystem der weiteren Luft/Flüssigsalz-Wärmetauschereinrichtung zum Erwärmen der in der Expandereinheit zu erwärmenden Luft durch die weitere Luft/Flüssigsalz-Wärmetauschereinrichtung, und/oder
- Speichern des durch die ersten Luft/Wasser-Wärmetauschereinrichtung (12) erwärmte Wasser in einem Wasser-Speichersystem, wobei das Wasser-Speichersystem vorzugsweise mit der weiteren Luft/Wasser-Wärmetauschereinrichtung derart gekoppelt ist zum Zuführen gespeicherten Wasser aus dem Wasser-Speichersystem der weiteren Luft/Wasser-Wärmetauschereinrichtung zum Erwärmen der in der Expandereinheit zu erwärmenden Luft durch die weitere Luft/Wasser-Wärmetauschereinrichtung.
